# EUROPEAN PATENT APPLICATION

(11) **EP 4 575 818 A1**
(43) Date of publication of application: **25.06.2025**
(21) Application number: 23218678.3
(22) Date of filing: 20.12.2023
(51) Int. Cl.: G06F 16/13, G06F 16/14, G06F 16/174, G06F 16/215, G06F 21/60

(54) **METHOD AND DEVICES FOR COMPARING DATA IN A FEDERATED STORAGE SYSTEM**

(71) Applicant: Helsing GmbH, 81671 Munich (DE)
(72) Inventor: ADLER, Antonia, 81671 Munich (DE); SCHNEIDER, Manuel-Andreas, 81671 Munich (DE); GENDRE, Maxime, 81671 Munich (DE)
(74) Representative: Rummler, Felix

(57) **Abstract**

Computer implemented methods and systems for determining data access restrictions are described, the method comprising: determining a first access restriction to first data; determining a data provenance of second data, the determined data provenance indicating a dependency of the second data on the first data; and determining, based on the data provenance and the first access restriction, a second access restriction to the second data.

## Description

### BACKGROUND OF THE INVENTION

Collaborative data workflows usually differentiate between user permissions to read the metadata of data objects, such as the name of a dataset, and permissions to read the content of those data objects, such as files in a dataset (logical separation of data and metadata).

Additionally, federated data storage systems might physically separate data and metadata: metadata is typically registered in a central data catalogue, while the data itself is stored on (distributed) infrastructure in the federated storage -- in the cloud or on-premises.

That is especially relevant in the military or defence domain, where the metadata of datasets might be classified differently than the data itself (so users need different permissions to read data or metadata) and the data must remain on different user premises (so users often use a federated storage to enable collaboration without compromising on data ownership).

### SUMMARY

The before-mentioned scenario poses a major challenge for users: how to ensure data authenticity and integrity and compare data to detect duplicates or - more generally - assess the similarity of different data, even if users might have access to metadata only and the corresponding data might be stored on infrastructure controlled by another user. There is a need for computer implemented methods and systems that overcome that challenge.

The present invention, which is defined by the appended claims, provides a computer implemented solution for ensuring authenticity and integrity of data and comparing data to detect duplicates or - more generally- assess data similarity in distributed resources.

The invention comprises a computer implemented method for comparing data in a federated storage system, the federated storage system comprising a server component and at least a first computing node which is communicatively coupled with the server component. The method according to the invention comprising:
providing a first digest of first data;
providing a second digest of second data;
comparing the first digest with the second digest;
determining, based on the comparing, whether the first data and second data at least partly match.

The step of providing the first digest may be performed by the first computing node and/or the server component. More particularly, the first computing node may create (compute) and upload the first digest to the server component.

The step of providing the second digest of second data may be performed by a second computing node and/or the server component.

The step of comparing may be performed by the server component or the first computing node, for example:
If the first digest is only stored at the first computing node, the server may provide the second digest to the first computing node, the first computing node may compare the first and second digests. Alternatively, the server may provide both the first and second digests to the first computing node.

If the first digest is uploaded by the first computing node to the server, the server may compare the first and second digests.

The second digest may have been uploaded by the second node to the server. Alternatively, the second node may have uploaded second data to the server and the server may have computed the second digest.

Similarly, the first digest may have been uploaded by the first node to the server. Alternatively, the first node may have uploaded the first data to the server and the server may have computed the first digest.

In the context of the invention, at least partly match encompasses that the data is identical, identical in parts, similar or similar in part.

In the case where data is identical or identical in parts the method may be used to identify duplicates on the server component. The server component can then for example decide to not store the duplicate part again and thus save storage space. Or the server component may decide whether to use or not use the data for training of an AI model.

A user of a client component could also use this to rule out that the first and second data, for example training and evaluation data of an AI model, are identical.

In the case where data is not identical, it could still be similar or similar in parts. This could be used to assess whether the first and second data are dissimilar, especially if they are dissimilar enough.

"dissimilar" not only refers to the "partial match" in the sense of "small subset of individual files are included in both datasets" but also to validation that non-identical individual files are sufficiently dissimilar. For example, slightly different images of a same scene would not be perfectly identical but could still be too similar. Especially when training a model for an AI, it is desirable that training data are sufficiently different. By assessing that data is similar or rather dissimilar enough, the server component may determine whether to use the data for training or for example reject the data.

The determined integrity/duplication/similarity or dissimilarity of data may be used as input in general data-driven workflows. For example, in an MLOps workflow to train and evaluate an AI model, the server component or computing node may use that information to determine which data to select for training or evaluation. As mentioned above, when training an ML model, it is desirable to use dissimilar training data.

In an embodiment, the second data is not accessible by the first computing node on the server component. The data may be restricted data that may not be accessible by the user of the first computing node. The digest value is in contrast regarded as metadata of the data and therefore is accessible. In such a case, the server component can provide the digest of the data to a computing node.

In an embodiment, the second data is stored at a second computing node, in particular wherein the second data is not accessible by the server component and/or wherein the second digest is generated by the server component. In a federated storage system, data can be stored in different entities. For example, the second data may be stored on a second client component and is not uploaded to the server component. This may be beneficial for example for highly confidential or classified data.

In both cases, by comparing the digests, a user is able to compare the data even when he has no access to the actual data. In an embodiment, the first digest may be created by the first computing node and uploaded to the server component, in particular as metadata of the first data. The benefit of creating the digest by the first node is that the actual first data may not be uploaded to the server component. Instead, it may be held locally at the first computing node. This is especially helpful for highly confidential or classified training data for an AI model.

Additionally or alternatively the first digest may be created by the server component after the first data has been uploaded, for example by the first computing node, to the server component. That asynchronous, server-side digest creation reduces upload (processing) complexity and time at the client-side (i.e. the computing node) That is especially useful if a digest is created for all files in a dataset with many files, which can be compute- and timeintense. Similarly, the second digest may be created by a second computing node and uploaded to the server component, in particular as metadata of the second data. As before, the benefit may be that the second data may not be uploaded to the server component. It may be stored locally at the second computing node. In the above mentioned scenario, where an AI model is trained, it may be that the first computing node provides the AI model and training data and the second computing node provides evaluation data. With the invention it is possible that they determine compatibility of the data through comparing the digests, even when a computing node does not have access to data of the respective other computing node.

Alternatively, the second digest may be created by the server component after the second data has been uploaded to the server component.

The origin of the first and second data is irrelevant for the invention. What is relevant is, that they are different data. The second data and or second digest may also have been uploaded by the first computing node.

Even then, in an embodiment the server component may deny access for the first computing node to the second data.

In an embodiment the method further comprises associating the digest with the data or individual files of that data, if the data is a dataset comprising multiple files and/or metadata of the data, , and/or associating the digest with the uploading computing node. The benefit may be that certain data, that for example stems from the same source or may contain specific data or serve a specific purpose may be grouped on the server component by the association. This makes it later possible for example to restrict or withdraw data that all have the same association.

In an embodiment, the digest may additionally be signed with the uploader's private key to generate a signed digest. This signing is executed at a computing node before uploading to the server component. The unsigned and signed digests are uploaded to the server component along with the data that is being stored. A client, maybe from another computing node, can then access the uploader's public key from the server component. The client retrieves the signed digest along with the data from the server component. The client uses the public key to decrypt the signed digest associated with a particular file. The client then creates a digest of the downloaded data and compares this locally created digest with the unencrypted signed digest Integrity and authenticity are guaranteed when both digests are equal, otherwise the files have been tampered with.

In an embodiment, metadata of the second data comprises an indication specifying the relationship of the second data with the first data. For example, training data (second data) for an AI model may indicate for which model (first data) they are intended or suitable.

In a more specific example, the first computing node uses the first data to train a model, i.e AI or ML model. The second computing node uses the trained model. The second computing node wants to know what training data was used to train the model to make sure that specific (e.g. out-dated, inappropriate, unreliable or otherwise unsuitable) data was not used. The digest(s) of the training data are then compared to the digest(s) of the specific data. Hence, a model is associated with all digests of its training data. More generally, the metadata of any data comprises the digests of the data on which said "any data" (e.g. a model) is based or from which it is derived. More particularly, said metadata comprises a provenance graph indicating how said "any data" is derived from the data underlying the stored digests. In that particular manner, the comparing step of the digests comprised in the provenance graph can be performed more granularly (e.g. only training data but not the evaluation data is to be compared to specific (unsuitable) data).

The comparing may be performed by the server component or the first computing node. This may depend for example on where the two digests are stored. If for example both digests are stored on the server component, it may be beneficial when the comparing is performed by the server, thus limiting the amount of data transmission. If however one or both digests are stored on a computing node, it may be beneficial when the computing node performs the comparing.

If the first digest is only stored at the first computing node, the server may provide the second digest to the first computing node, the first computing node may compare the first and second digests. For example the first computing node may train an AI model with training data (first data), that is only locally stored at the first computing node. To verify the training data against for example the evaluation data (second data) stored at the server component, the second digest of the second data is provided by the server component, so that the first computing node may compare the two digests.

It may also be the case that the first and second data is stored at the server component. In this case the server may provide both the first and second digests to the first computing node, which does the comparing.

However in the latter case the comparing also may be done by the server component and the result of the comparing is provided to the first computing node.

In an example, a first computing node may store first data locally. It computes a first digest value of the first data and may upload the first digest to the server component. A second computing node stores second data locally, computes a second digest value of the second data and uploads the second digest value to the server component. The server component provides the second digest value to the first computing node, which compares the first and second digest values.

In another example, the first computing node uploads first data to the server component. The server component computes and stores a first digest value of the first data. A second computing node stores second data locally, computes a second digest value of the second data and uploads the second digest value to the server component. The server component provides the second digest value to the first computing node, which compares the first and second digest values. This is a common use case, where the first computing node for example trains an AI model with training data but wants to check the trained model against evaluation data (second data) stored at the second computing node. This can be done by comparing the digest values.

In an example, a first computing node may store first data locally. It computes a first digest value of the first data and may upload the first digest to the server component. The second computing node uploads second data to the server component. The server component computes and stores a second digest value of the second data. The server component provides the second digest value to the first computing node, which compares the first and second digest values.

In the above example, both first data and second data may also be uploaded to the server component.

In another example, the first computing node uploads first data to the server component. The server component computes and stores a first digest value of the first data. The second computing node uploads second data to the server component. The server component computes and stores a first digest value of the first data and a second digest value of the second data. The server component provides the first and second digest values to the first computing node, which compares the first and second digest values.

In another example, a first computing node may store first data locally. It computes a first digest value of the first data and may upload the first digest to the server component. A second computing node stores second data locally, computes a second digest value of the second data and uploads the second digest value to the server component. The server component compares first and second digest values and provides result to first computing node.

In another example, the first computing node uploads first data to the server component. The server component computes and stores a first digest value of the first data. A second computing node stores second data locally, computes a second digest value of the second data and uploads the second digest value to the server component. The server component compares first and second digest values and provides result to first computing node.

In an example, a first computing node may store first data locally. It computes a first digest value of the first data and may upload the first digest to the server component. The second computing node uploads second data to the server component. The server component computes and stores a second digest value of the second data. The server component compares first and second digest values and provides result to first computing node.

In the above example, both first data and second data may also be uploaded to the server component.

In another example, the first computing node uploads first data to the server component. The server component computes and stores a first digest value of the first data. The second computing node uploads second data to the server component. The server component computes and stores a first digest value of the first data and a second digest value of the second data. The server component compares first and second digest values and provides result to first computing node. In an embodiment a digest and/or data uploaded to the server component is signed. Wherein signed means digitally signed with some sort of digital identifier that allows unambiguously determine integrity of the signed data.

In an embodiment, the digest may be signed with an uploader's private key to generate a signed digest. The private key being part of a private/public key pair. This signing is executed at a computing node before uploading to the server component. The unsigned and signed digests are uploaded to the server component along with the data that is being stored. A client, maybe from another computing node, can then access the uploader's public key from the server component. The client retrieves the signed digest along with the data from the server component. The client uses the public key to decrypt the signed digest associated with a particular file. The client then creates a digest of the downloaded data and compares this locally created digest with the unencrypted signed digest Integrity and authenticity are guaranteed when both digests are equal, otherwise the files have been tampered with. By this method the integrity of data can be determined.

In an embodiment it may also be beneficial when data uploaded to the server component is signed.

For the signing a public/private key pair may be used In an embodiment the key pair for signing is provided by the server component. In an embodiment, the method further comprises: determining, based on the comparison, after data has been uploaded to the server component, that at least part of the data is already stored in the server component. This allows the server component for example to recognize duplicates. The server component may then decide how to further proceed with the determined duplicates. It may anyway store the duplicate data, it may as well delete the data. It may present a warning to the uploading client component and let it decide how to proceed with the duplicates. By not storing any duplicate data, storage capacity and energy may be saved.

In an embodiment, a digest unambiguously identifies the data of which it is created, especially wherein the digest is a hash value of the data. This allows for example identifying duplicates. The digest may also comprise metadata of the data that allows for additional identification. The metadata may be added to the digest as plain text, so that the metadata may be read and/or processed independently from the digest value of the data.

The digest may refer to the entire data or to one or more individual files in that data. For example: a digest on dataset level would enable a user to determine for example whether training data is the same. A digest at file level would enable a user to determine for example that in the training data, there are individual files that are also part of an evaluation data.

The invention also refers to a server component, especially for use in a federated storage system, the server component comprising means to carry out the method of any of the preceding claims. Especially the server component may comprise means for generating digests for uploaded data.

The invention also refers to a federated storage system comprising a server component and at least one client component, comprising means for carrying out the method of any of the preceding claims.

The invention also refers to a computer program comprising instructions which, when the program is executed by a data processing system, cause the data processing system to carry out the inventive method.

The invention also refers to a computer-readable medium comprising instructions which, when executed by a data processing system, cause the data processing system to carry out the inventive method.

### BRIEF DESCRIPTION OF THE DRAWINGS

The present invention may be better understood from reading the following description of non-limiting embodiments, with reference to the attached drawings, wherein:
Fig. 1 shows a schematic of a federated storage system with a server component and two computing nodes;
Fig. 2 shows a schematic block diagram of a server component;
Fig. 3 shows a flow chart of a computer implemented method for comparing data in a federated storage system;
Fig. 4 schematically shows data and digests;

### DETAILLED DESCRIPTION OF THE PREFERRED EMBODIMENTS

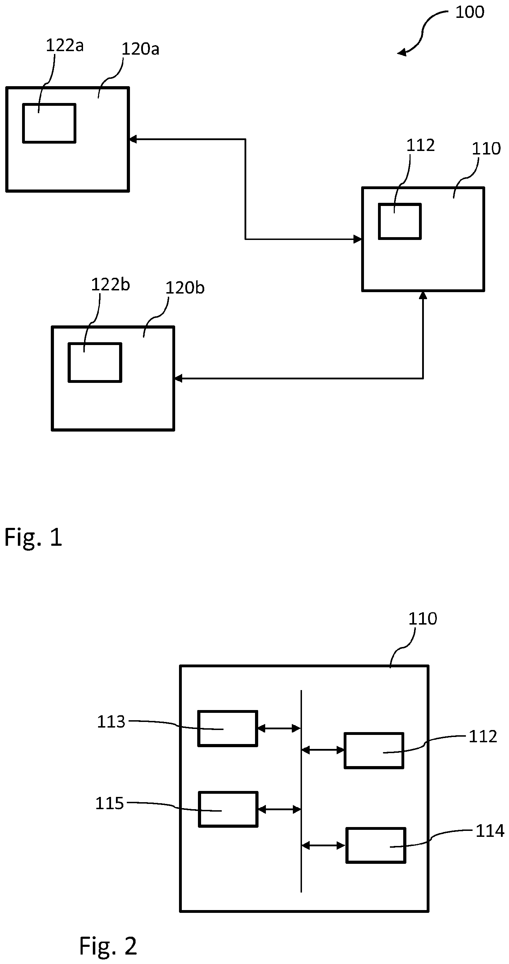

**Figure 1** shows a federated storage system 100 with a server component 110 and two computing nodes 120. The server component 110 comprises a storage 112 for storing data. The storage 112 may be integral to the server component or physically and/or geographically distributed. Each computing node 120 comprises a local storage 122.

The computing nodes 120 and the server component 110 are communicatively connected via a network. This network may be a permanent network, for example a wired or wireless network like ethernet or Wi-Fi.

**Figure 2** shows a block diagram of a server component 110, for example of Fig. 1. The server component 110 comprises at least a storage 112 for storing data, a processor 114 for processing data and carrying out an inventive method, a program memory 113 which contains instructions for the inventive method to carry out on the processor 114 and a communication unit 115 for communicating with for example computing nodes 120 in a network or federated storage system 100.

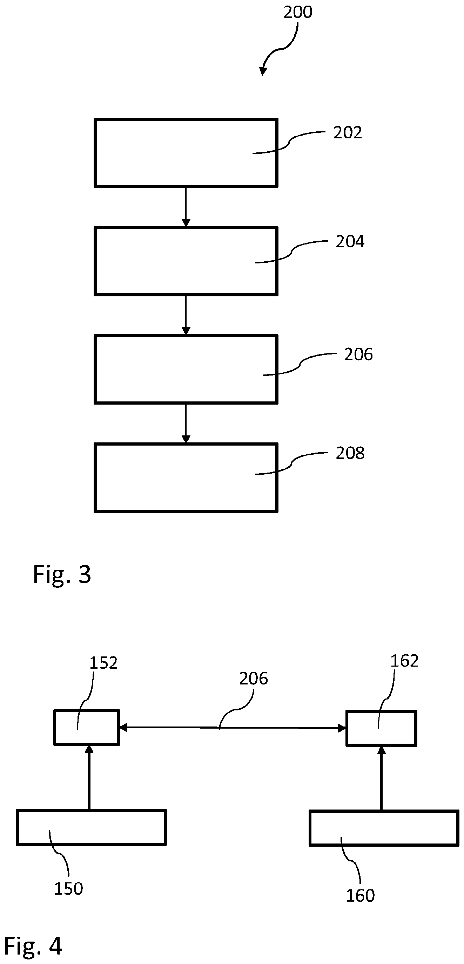

**Figure 3** shows a flow chart of a computer implemented method 200 for comparing data in a federated storage system like the federated storage system 100 of Fig. 1. The method is described with reference to Fig. 4.

**Figure 4** shows first data 150 and second data 160 and a first digest 152 and a second digest 162. The first digest 152 is created from the first data 150 and unambiguously identifies the first data 150. The second digest 162 is accordingly unambiguously identifying the second data 160. The digest may be a hash value or any other identifier that is unique and unambiguous. The data may be stored in a local storage 122 of a computing node 120 or in the central storage 112 at the server component 110 of Fig. 1.

For comparing data in a federated storage system, for example first data 150 and second data 160 the data may be compared directly. However in federated storage systems, it may be that for example a first computing node 120a has no access to data stored locally at 122b in a second computing node 120b. Or it has no access rights to access the data stored in the server component it may want to compare its own data with.

This may be the case where for example a computing node wants to upload new training data to the federated storage but other training data may be confidential and restricted. This may also be the case where training data need to be compared to evaluation data that is restricted.

The inventive method solves this by the following method.

Step 202 comprises providing a first digest 152 of first data 150. As explained above, the digest is a unique identifier that unambiguously identifies the underlying data. In step 202, the first digest 152 may be provided by the server component 110. It may be created by the server component 110 after uploading the first data 150 to the server component. It may also be created by the first computing node 120a and then be uploaded to the server component 110.

It is also possible that the first data 150 is stored locally at the first computing node 120a. In that case the first digest 152 is preferably created by the first computing node 120a.

Step 204 comprises providing a second digest 162 of second data 160. The second digest 162 may be created by the server component 110 after uploading the second data 160 to the server component 110. The second data 162 may also be stored locally at a computing node 120. This may be the first computing node 120a or the second computing node 120b. Therefore, the second digest 162 may be created by the first computing node 120a or the second computing node 120b respectively.

Step 206 comprises comparing the first digest 152 with the second digest 162. As described above, a digest may be a hash value, for example an MD5 or SHA value. The advantage of comparing only the hash values is, that these are often restricted in size, for example 128 to 512 bits. Comparing digests is simple, fast and efficient compared to bit-comparing the underlying data itself.

The comparing may be done by the server component 110 or a computing node 120. This may depend on where the digests for comparing are stored. When both digests are stored at the server component, the comparing may be done at the server component. In other cases, where data is stored locally at a computing node, the comparing may be done at that computing node. Of course, the comparing may be done by a computing node even when the data is stored remotely from that computing node, at the server component and/or a second computing node.

Step 208 comprises determining, based on the comparison of the first digest with the second digest, whether the first data and second data at least partly match. This is possible since the digest is a unique and unambiguous identifier for the data. That means that if the first digest 152 and the second digest 162 are identical, the underlying first data 150 and second data 160 are identical as well.

In an example the first data are images for training an AI model and the second data are images for evaluating the same AI model. It may be desirable that the training and evaluation data are not identical. With the inventive method it could be easily determined if training and evaluation data are different. Wherein it is irrelevant where the actual data is stored or whether a computing node has access to the other data.

Especially in the above example, it may be that the images are not exactly identical but similar. For example they may show the same scene with slightly different lighting or from a slightly different angle. Still they might be too similar to be useful for training. Therefore, in an embodiment it may also be possible to determine that data is similar to each other. In such a case the digest may comprise additional meta data or is an identifier that indicates similarities.

## Claims

1. A computer implemented method for comparing data in a federated storage system (100), the federated storage system (100) comprising a server component (110) and at least a first computing node (120a) which is communicatively coupled with the server component (110), the method comprising:
providing (202), a first digest (152) of first data (150);
providing (204), a second digest (162) of second data (160);
comparing (206) the first digest (152) with the second digest (162);
determining (208), based on the comparing, whether the first data (150) and second data (160) at least partly match.

2. The method of claim 1, wherein the second data (160) is not accessible by the first computing node (120a) on the server component (110) and/or wherein the second data (160) is stored at a second computing node (120b), in particular wherein the second data (160) is not accessible by the server component (110).

3. The method of any of the preceding claims, wherein the first digest (152) is created by the first computing node (120a) and uploaded to the server component (1110), in particular as metadata of the first data (150) and/or wherein the first digest (152) is created by the server component (110) after the first data (150) has been uploaded to the server component (110).

4. The method of any of the preceding claims, wherein the second digest (162) is created by the first computing node (120a) or a second computing node (120b) and uploaded to the server component (110), in particular as metadata of the second data (160) and/or wherein the second digest (162) is created by the server component (110) after the second data (160) has been uploaded to the server component (110) and/or wherein access to the second data (160) is denied for the first or second computing node (120a) by the server component (110).

5. The method of any of the preceding claims further comprising: associating the digest (152, 162) with the data (150, 160) and/or metadata of the data and/or associating the digest with the uploading computing node.

6. The method of any of the preceding claims, wherein metadata of the second data (160) comprises an indication specifying the relationship of the second data (160) with the first data (150).

7. The method of any of the preceding claims, wherein the comparing is performed by the server component (110) or the first computing node (120a).

8. The method of any of the preceding claims, wherein digest values (152, 162) and/or data (150, 160) uploaded to the server component (110) are signed, especially using a public/private key pair, in particular wherein the key pair is provided by the server component (110).

9. The method of any of the preceding claims, wherein the method further comprises: determining, based on the comparison, after data has been uploaded to the server component (110), that at least part of the data is already stored in the server component (110).

10. The method of any of the preceding claims, wherein a digest unambiguously identifies the data of which it is created, especially wherein the digest is a hash value of the data and/or wherein a digest refers to the entire data or to one or more individual files in that data.

11. A server component (110), especially for a federated storage system, comprising at least a program memory (113) and a processor (114), wherein the program memory (113) contains instructions when executed by the processor (114) result in the server component to carry out the method of any of the preceding claims.

12. A federated storage system comprising a server component (110) and at least one client component (120), comprising means for carrying out the method of any of the preceding claims.

13. A computer program comprising instructions which, when the program is executed by a data processing system, cause the data processing system to carry out the method of any of claims 1 to 11.

14. A computer-readable medium comprising instructions which, when executed by a data processing system, cause the data processing system to carry out the method of any of claims 1 to 11.
